# EUROPÄISCHE PATENTSCHRIFT

(11) **EP 1 760 383 B1**
(45) Veröffentlichungstag und Bekanntmachung des Hinweises auf die Patenterteilung: **30.07.2008**
(21) Anmeldenummer: 06018280.5
(22) Anmeldetag: 01.09.2006
(51) Int. Cl.: F16L 25/00, F16L 23/14, F24F 13/02

(54) **Eckwinkelsystem für Verbindungsflansche von Blechkanalabschnitten**
Corner piece system for connecting flanges of sheet metal canal sections
Système de raccord d'angle pour brides d'assemblage de canaux en tôle

(30) Priorität: 02.09.2005 DE 102005042016
(43) Veröffentlichungstag der Anmeldung: 07.03.2007
(73) Patentinhaber: Hans Prechtl GmbH & Co. KG, 95485 Warmensteinach (DE)
(72) Erfinder: Prechtl, Hans-Peter, 95485 Warmensteinach (DE)
(74) Vertreter: LOUIS, PÖHLAU, LOHRENTZ

(56) Entgegenhaltungen:
- EP-A- 0 151 075
- EP-A- 1 491 827
- WO-A-01/02777

## Beschreibung

Die Erfindung betrifft ein Eckwinkelsystem gemäß dem Oberbegriff des Anspruches 1 für Verbindungsflansche von Blechkanalabschnitten.

Aus der EP 0 141 306 A1 ist ein Eckwinkelsystem bekannt, mit einem ersten und einem zweiten Schenkelelement, die jeweils einen in einen Verbindungsflanschabschnitt einsteckbaren Einsteckabschnitt und einen Scheitelabschnitt aufweisen, wobei die beiden Scheitelabschnitte sich im freien Eckbereich benachbarter Verbindungsflanschabschnitte überdecken und jeweils mit einem Schraubloch ausgebildet sind. Bei diesem bekannten Eckwinkelsystem ist eines der beiden Schenkelelemente zwischen dem Einsteckabschnitt und dem Scheitelabschnitt mit einer Abkantung und das vom Einsteckabschnitt abgewandte Außenende seines Scheitelabschnittes mit einem Bördelrand ausgebildet. Das zweite Schenkelelement ist einfach ebenflächig ausgebildet. Das mit der Abkantung und dem Bördelrand ausgebildete Schenkelelement kann zu seiner Versteifung mit einem Verstärkungssteg ausgebildet sein. Dieser Verstärkungssteg bedingt einen erhöhten Materialbedarf für dieses Schenkelelement. Nach dem Einstecken der Einsteckabschnitte der Schenkelelemente in die zugehörigen Verbindungsflanschabschnitte der Blechkanalabschnitte ist es bei diesem bekannten Eckwinkelsystem erforderlich, einen über den Bördelrand überstehenden Ansatz zu einer Abschrägung des ebenen Schenkelelementes hin umzuschlagen, um eine Sicherung gegen ein Herauswandern der Schenkelelemente aus dem jeweils zugehörigen Verbindungsflanschabschnitt zu verhindern. Aus diesem Umschlagen kann eine Verletzungsgefahr resultieren.

Eckwinkelsysteme der eingangs genannten Art sind aus der EP 0 151 075 A2, aus der DE 74 08 661 U sowie aus der WO 01/02777 A1 bekannt. Bei diesen bekannten Eckwinkelsystemen ist jedes der beiden Schenkelelemente zwischen dem Einsteckabschnitt und dem Scheitelabschnitt mit einer Abkantung und an dem vom Einsteckabschnitt abgewandten Außenrand des Scheitelabschnittes mit einem Bördelrand ausgebildet. Durch eine solche Ausbildung ergibt sich eine vierseitige Positionierung der Scheitelabschnitte der beiden Schenkelelemente durch die beiden Abkantungen und die beiden Bördelränder; eine weitere Sicherung gegen ein ungewolltes Herauswandern der Schenkelelemente aus den zugehörigen, zueinander senkrecht orientierten Verbindungsflanschabschnitten des jeweiligen Blechkanalabschnittes ist dort jedoch nicht vorgesehen.

Der Erfindung liegt die Aufgabe zugrunde, ein Eckwinkelsystem der eingangs genannten Art zu schaffen, wobei die beiden Schenkelelemente in den zugehörigen Verbindungsflanschabschnitten sicher und zuverlässig festlegbar sind.

Diese Aufgabe wird bei einem Eckwinkelsystem der eingangs genannten Art erfindungsgemäß durch die Merkmale des Kennzeichenteiles des Anspruches 1 gelöst. Bevorzugte Aus- bzw. Weiterbildungen des erfindungsgemäßen Eckwinkelsystems sind in den Unteransprüchen gekennzeichnet.

Erfindungsgemäß ist es nicht erforderlich, beispielsweise mittels eines Hammers einen eine Verletzungsgefahr darstellenden Ansatz umschlagen zu müssen, weil beim Einstecken der beiden Schenkelelemente in die zugehörigen Verbindungsflanschabschnitte von Blechkanalabschnitten die Rastnoppe des einen Schenkelelementes direkt und unmittelbar, d.h. ohne weiteres, in die Rastaussparung des anderen Schenkelelementes formschlüssig einrastet. Auf diese Weise wird in einfacher Weise eine optimale Sicherung gegen ein ungewolltes Herauswandern der Schenkelelemente aus den benachbarten und zueinander senkrecht orientierten Verbindungsflanschabschnitten erzielt.

Bei dem erfindungsgemäßen Eckwinkelsystem besitzen die beiden Schenkelelemente vorzugsweise die gleiche Wanddicke und sind die Abkantungen der beiden Schenkelelemente zweckmäßigerweise mit unterschiedlichen Tiefen ausgebildet, wobei die Summe der beiden Abkantungen jedoch gleich ist der Wanddicke der Schenkelelemente. Bei einer solchen Ausbildung der zuletzt genannten Art ist es bevorzugt, wenn die Abkantung des den Bördelrand mit der Rastnoppe aufweisenden Schenkelelementes tiefer ist als die Abkantung des mit der Rastaussparung ausgebildeten Schenkelelementes.

Als vorteilhaft hat es sich erwiesen, wenn die Rastnoppen am Innenende des Bördelrandes des einen Schenkelelementes und die Rastaussparung am Scheitelabschnitt, an die Abkantung des zweiten Schenkelelementes angrenzend, ausgebildet sind. Selbstverständlich ist es auch möglich, die Rastnoppe und die Rastaussparung an einem anderen Ort des Bördelrandes des einen Schenkelelementes und des entsprechenden Längsrandes des zweiten Schenkelelementes auszubilden.

Zur Erhöhung der Formstabilität, d.h. zur Versteifung der beiden Schenkelelemente, ist es möglich, die Einsteckabschnitte der beiden Schenkelelemente jeweils mit einer länglichen Eindellung auszubilden. Diese länglichen Eindellungen können in einem Prägevorgang realisiert werden.

Um das Einstecken der beiden Schenkelelemente in die zugehörigen, zueinander benachbarten Verbindungsflanschabschnitte zu erleichtern, hat es sich als zweckmäßig erwiesen, wenn die Einsteckenden der Einsteckabschnitte der beiden Schenkelelemente mit Fasenflächen ausgebildet sind.

Bei den Teilen des Eckwinkelsystems handelt es sich vorzugsweise um Stanzteile, die trommelverzinkt sind. Sie weisen vorteilhafterweise keine scharfen Schnittkanten auf, denn beim Stanzen entstandene scharfe Schnittkanten sind beim Trommelverzinken automatisch entschärft.

Weitere Einzelheiten, Merkmale und Vorteile ergeben sich aus der nachfolgenden Beschreibung eines in der Zeichnung dargestellten Ausführungsbeispieles der erfindungsgemäßen Eckwinkelsystems für Verbindungsflansche von Blechkanalabschnitten.

Es zeigen:
- Figur 1: abschnittweise Verbindungsflanschabschnitte eines Blechkanalabschnittes mit einem zugehörigen Eckwinkelsystem, das ein erstes und ein zweites Schenkelelement aufweist,
- Figur 2: eine Seitenansicht des ersten Schenkelelementes des Eckwinkelsystems gemäß Figur 1,
- Figur 3: eine Seitenansicht des zweiten Schenkelelementes des Eckwinkelsystems gemäß Figur 1,

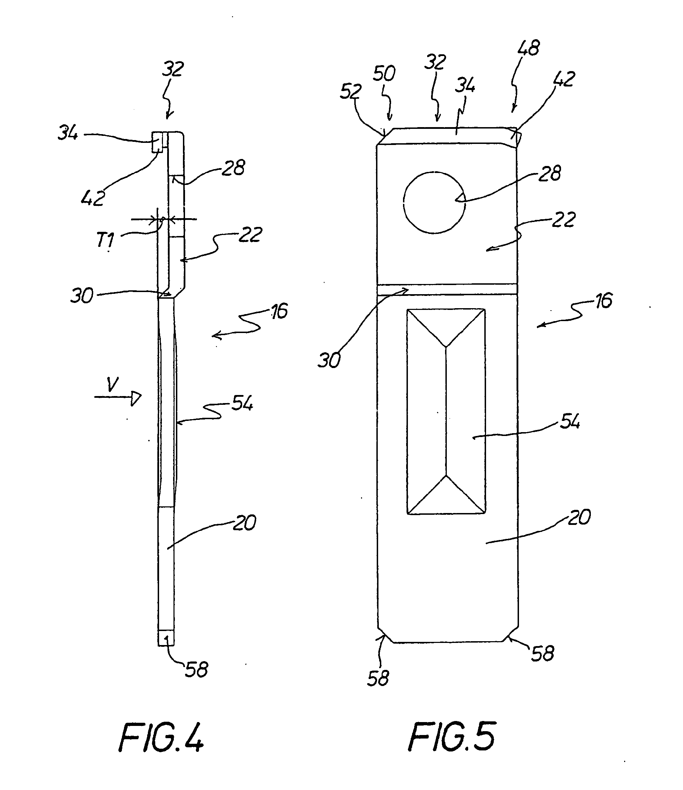

- Figur 4: das erste Schenkelelement in einer der Figur 2 entsprechenden Seitenansicht in einem größeren Maßstab,
- Figur 5: eine Ansicht des ersten Schenkelelementes in Blickrichtung des Pfeiles V in Figur 4,

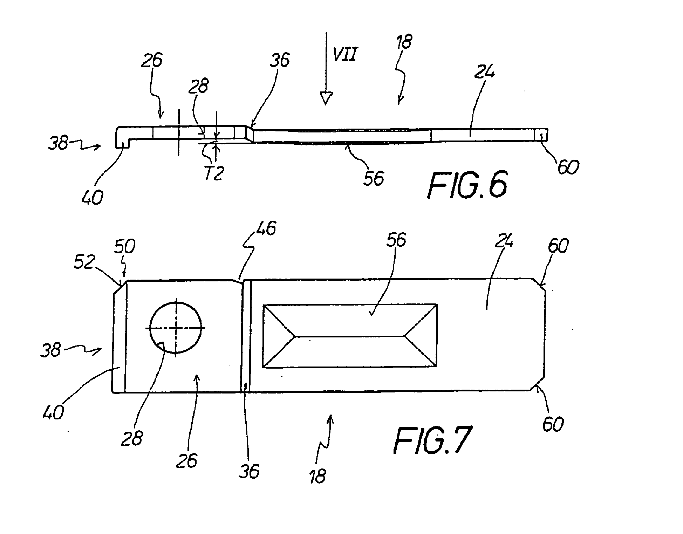

- Figur 6: eine Seitenansicht des zweiten Schenkelelementes ähnlich der Seitenansicht gemäß Figur 4 in einem größeren Maßstab,
- Figur 7: eine Ansicht des Seitenschenkelelementes in Blickrichtung des Pfeils VII in Figur 6,
- Figur 8: eine der Figur 1 ähnliche Darstellung des Eckwinkelsystems allein im zusammengebauten Verbindungszustand,
- Figur 9: eine Seitenansicht des ersten Schenkelelementes in Blickrichtung des Pfeiles IX in Figur 8, und

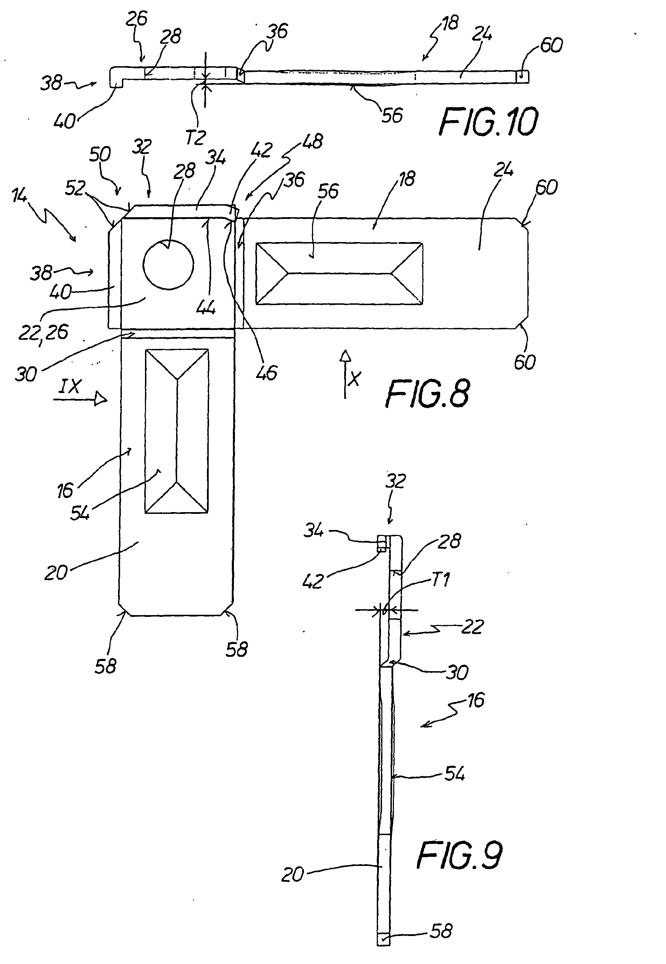

- Figur 9: eine Seitenansicht des zweiten Schenkelelementes allein in Blickrichtung des Pfeiles X in Figur 8.

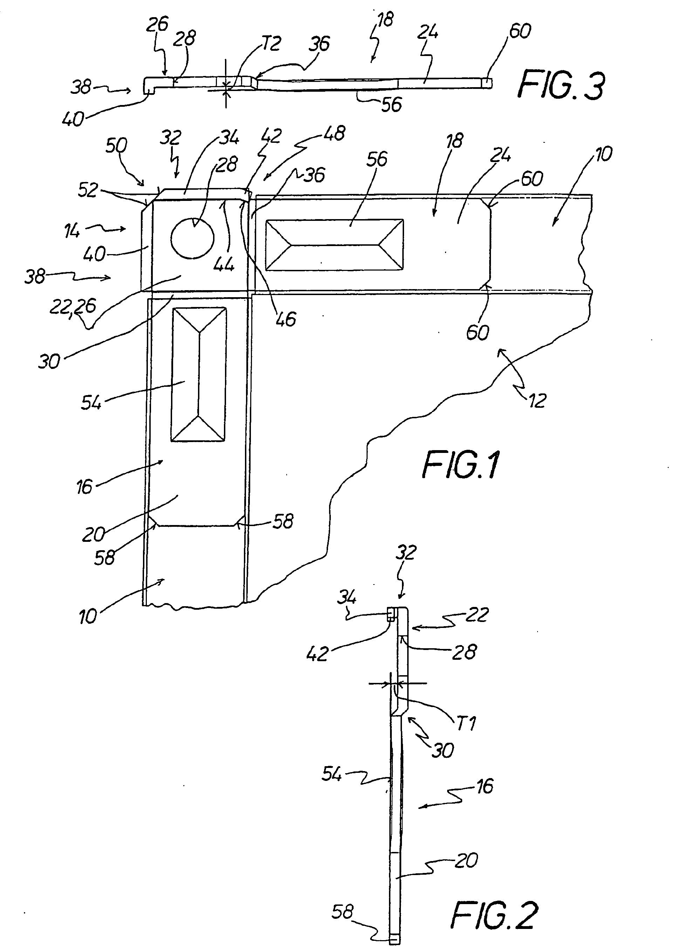

Figur 1 verdeutlicht abschnittweise zwei miteinander einen rechten Winkel einschließende Verbindungsflanschabschnitte 10 eines Blechkanalabschnittes 12 sowie ein Eckwinkelsystem 14 für die Verbindungsflansche 10, das ein erstes Schenkelelement 16 und ein zweites Schenkelelement 18 aufweist. Das erste Schenkelelement 16 weist einen in den zugehörigen Verbindungsflanschabschnitt 10 einsteckbaren Einsteckabschnitt 20 und einen aus dem entsprechenden Verbindungsflanschabschnitt 10 herausstehenden Scheitelabschnitt 22 auf. Das zweite Schenkelelement 18 weist einen Einsteckabschnitt 24, der in den zugehörigen Verbindungsflanschabschnitt 10 einsteckbar bzw. eingesteckt ist, und einen aus dem zugehörigen Verbindungsflanschabschnitt 10 herausstehenden Scheitelabschnitt 26 auf. Der Scheitelabschnitt 26 des zweiten Schenkelelementes 18 und der Scheitelabschnitt 22 des ersten Schenkelelementes 16 überdecken sich im in die Verbindungsflanschabschnitte 10 eingesteckten Zustand der Schenkelelemente 16 und 18. Jeder der beiden Einsteckabschnitte 20 und 24 ist mit einem Schraubloch 28 ausgebildet, die sich im eingesteckten Zustand der Schenkelelemente 16 und 18 überdecken. Durch die sich überdeckenden Schraublöcher 28 ist eine Schraube durchsteckbar, die mit einer Schraubmutter verschraubbar ist.

Wie aus den Zeichnungsfiguren ersichtlich ist, weist das erste Schenkelelement 16 zwischen dem Einsteckabschnitt 20 und dem Scheitelabschnitt 22 eine Abkantung 30 und an dem vom Einsteckabschnitt 20 abgewandten Außenende 32 des Scheitelabschnittes 22 eine Bördelrand 34 auf. Das zweite Schenkelelement 18 ist zwischen seinem Einsteckabschnitt 24 und seinem Scheitelabschnitt 26 ebenfalls mit einer Abkantung 36 und an dem vom Einsteckabschnitt 24 abgewandten Außenende 38 des Scheitelabschnittes 26 mit einem Bördelrand 40 ausgebildet.

Die Abkantung 30 des ersten Schenkelelementes 16 weist eine Tiefe T1 und die Abkantung 36 des zweiten Schenkelelementes 18 weist eine Tiefe T2 auf, die voneinander verschieden sind. Die Tiefe T1 ist bei dem in den Zeichnungsfiguren dargestellten Ausführungsbeispiel größer als die Tiefe T2.

Der Bördelrand 34 des ersten Schenkelelementes 16 ist mit einer Rastnoppe 42 ausgebildet, die dem Einsteckabschnitt 20 des ersten Schenkelelementes 16 zugewandt ist. Das zweite Schenkelelement 18 ist am zugehörigen Längsrand 44 seines Scheitelabschnittes 26 mit einer Rastaussparung 46 ausgebildet, in die die Rastnoppe 42 im in die Verbindungsflanschabschnitte 10 einsteckten Verbindungszustand der beiden Schenkelelemente 16 und 18 formschlüssig einrastet. Die Rastausnehmung 46 ist bei dem in den Zeichnungsfiguren dargestellten Ausführungsbeispiel des Eckwinkelsystemes 14 am Scheitelabschnitt 26 des zweiten Schenkelelementes 18, an seine Abkantung 36 angrenzend, ausgebildet und die Rastnoppe 42 ist am Innenende 48 des Bördelrandes 34 des ersten Schenkelelementes 16 vorgesehen. Am Außenende 50 sind die Bördelränder 34 und 40 der beiden Schenkelelemente 16 und 18 jeweils mit einer Fasenfläche 52 ausgebildet.

Zur Versteifung, d.h. zur Erhöhung der Formstabilität, sind die Einsteckabschnitte 20, 24 der beiden Schenkelelemente 16, 18 jeweils mit einer länglichen Eindellung 54, 56 ausgebildet. Die Einsteckenden der Einsteckabschnitte 20, 24 der beiden Schenkelelemente 16 und 18 sind mit Fasenflächen 58, 60 ausgebildet.

Gleiche Einzelheiten sind in allen Figuren jeweils mit denselben Bezugsziffern bezeichnet, so dass es sich erübrigt, in Verbindung mit den Figuren alle Einzelheiten jeweils detailliert zu beschreiben.

## Patentansprüche

1. Eckwinkelsystem für Verbindungsflanschabschnitte von Blechkanalabschnitten (12), mit einem ersten und einem zweiten Schenkelelement (16 und 18), die jeweils einen in einen Verbindungsflanschabschnitt (10) einsteckbaren Einsteckabschnitt (20; 24) und einen Scheitelabschnitt (22; 26) aufweisen, wobei die beiden Scheitelabschnitte (22 und 26) sich im freien Eckbereich benachbarter Verbindungsflanschabschnitte (10) überdecken und jeweils mit einem Schraubloch (28) ausgebildet sind, und jedes der beiden Schenkelelemente (16, 18) zwischen dem Einsteckabschnitt (20; 24) und dem Scheitelabschnitt (22; 26) eine Abkantung (30; 36) und an dem vom Einsteckabschnitt (20; 24) abgewandten Außenende (32; 38) des Scheitelabschnittes (22; 26) einen Bördelrand (34; 40) aufweist,
**dadurch gekennzeichnet,**
**dass** der Bördelrand (34) des einen Schenkelelementes (16) mit einer seinem Einsteckabschnitt (20) zugewandten Rastnoppe (42) und das zweite Schenkelelement (18) am zugehörigen Längsrand (44) mit einer Rastaussparung (46) ausgebildet ist, in die die Rastnoppe (42) im in die Verbindungsflanschabschnitte (10) eingesteckten Verbindungszustand der beiden Schenkelelemente (16 und 18) formschlüssig einrastet.

2. Eckwinkelsystem nach Anspruch 1,
**dadurch gekennzeichnet,**
**dass** die beiden Schenkelelemente (16 und 18) die gleiche Wanddicke besitzen, und dass die Abkantungen (30; 36) der beiden Schenkelelemente (16; 18) unterschiedliche Tiefen (T1, T2) aufweisen, wobei die Summe der beiden Tiefen (T1, T2) gleich ist der Wanddicke der Schenkelelemente (16, 18).

3. Eckwinkelsystem nach Anspruch 2,
**dadurch gekennzeichnet,**
**dass** die Abkantung (30) des den Bördelrand (34) mit der Rastnoppe (42) aufweisenden Schenkelelementes (16) tiefer ist als die Abkantung (36) des mit der Rastaussparung (46) ausgebildeten Schenkelelementes (18).

4. Eckwinkelsystem nach einem der Ansprüche 1 bis 3,
**dadurch gekennzeichnet,**
**dass** die Rastnoppe (42) am Innenende (48) des Bördelrandes (34) des einen Schenkelelementes (16) und die Rastaussparung (46) am Scheitelabschnitt (26) des zweiten Schenkelelementes (18), an dessen Abkantung (36) angrenzend, ausgebildet sind.

5. Eckwinkelsystem nach einem der Ansprüche 1 bis 4,
**dadurch gekennzeichnet,**
**dass** die Bördelränder (34; 40) der beiden Schenkelelemente (16, 18) am Außenende (50) jeweils mit einer Fasenfläche (52) ausgebildet sind.

6. Eckwinkelsystem nach einem der Ansprüche 1 bis 5,
**dadurch gekennzeichnet,**
**dass** die Einsteckabschnitte (20; 24) der beiden Schenkelelemente (16, 18) mit länglichen Eindellungen (54; 56) ausgebildet sind.

7. Eckwinkelsystem nach einem der Ansprüche 1 bis 6,
**dadurch gekennzeichnet,**
**dass** die Einsteckecken der Einsteckabschnitte (20; 24) der beiden Schenkelelemente (16, 18) mit Fasenflächen (58; 60) ausgebildet sind.

## Claims

1. Corner angle system for connecting flange sections of sheet-metal channel sections (12), having a first and a second limb element (16 and 18) which in each case have a plug-in section (20; 24) which can be plugged into a connecting flange section (10) and an apex section (22; 26), the two apex sections (22 and 26) overlapping one another in the free corner region of adjacent connecting flange sections (10) and being configured in each case with a screw hole (28), and each of the two limb elements (16, 18) having an angled-over portion (30; 36) between the plug-in section (20; 24) and the apex section (22; 26) and having a flange edge (34; 40) at that outer end (32; 38) of the apex section (22; 26) which faces away from the plug-in section (20; 24), **characterized in that** the flange edge (34) of one limb element (16) is formed with a latching lug (42) which faces its plug-in section (20) and the second limb element (18) is formed with a latching cut-out (46) on the associated longitudinal edge (44), into which latching cut-out (46) the latching lug (42) latches positively in the connecting state of the two limb elements (16 and 18), in which they are plugged into the connecting flange sections (10).

2. Corner angle system according to Claim 1, **characterized in that** the two limb elements (16 and 18) have the same wall thickness, and **in that** the angled-over portions (30; 36) of the two limb elements (16; 18) have different depths (T1, T2), the sum of the two depths (T1, T2) being equal to the wall thickness of the limb elements (16, 18).

3. Corner angle system according to Claim 2, **characterized in that** the angled-over portion (30) of the limb element (16) which has the flange edge (34) with the latching lug (42) is lower than the angled-over portion (36) of the limb element (18) which is formed with the latching cut-out (46).

4. Corner angle system according to one of Claims 1 to 3, **characterized in that** the latching lug (42) is formed at the inner end (48) of the flange edge (34) of one limb element (16) and the latching cut-out (46) is formed at the apex section (26) of the second limb element (18), in a manner which adjoins its angled-over portion (36).

5. Corner angle system according to one of Claims 1 to 4, **characterized in that** the flange edges (34; 40) of the two limb elements (16, 18) are formed at the outer end (50) in each case with a bevel face (52).

6. Corner angle system according to one of Claims 1 to 5, **characterized in that** the plug-in sections (20; 24) of the two limb elements (16, 18) are formed with elongate indentations (54; 56).

7. Corner angle system according to one of Claims 1 to 6, **characterized in that** the plug-in corners of the plug-in sections (20; 24) of the two limb elements (16, 18) are formed with bevel faces (58; 60).

## Revendications

1. Système de cornière d'angle pour des brides d'assemblage de tronçons de conduits métalliques (12), comportant une première et une deuxième branche (16 et 18), lesquelles comportent chacune une partie d'enfichage (20 ; 24), apte à être enfichée dans une bride d'assemblage (10), et une partie frontale (22 ; 26), les deux parties frontales (22 et 26) se recouvrant dans la zone d'angle libre de deux brides d'assemblage (10) adjacentes et étant réalisées chacune avec un trou taraudé (28), et chacune des deux branches (16, 18) comporte une zone de pliage (30 ; 36) entre la partie d'enfichage (20 ; 24) et la partie frontale (22 ; 26) et un bord rabattu (34 ; 40) au niveau de l'extrémité extérieure (32 ; 38), opposée à la partie d'enfichage (20 ; 24), de la partie frontale (22 ; 26),
**caractérisé en ce que** le bord rabattu (34) de l'une des branches (16) est réalisé avec un ergot de blocage (42) orienté vers sa partie d'enfichage (20) et la deuxième branche (18), sur le bord longitudinal (44) associé, est réalisée avec un évidement de blocage (46), dans lequel vient se bloquer par conjugaison de forme l'ergot de blocage (42) lorsque les deux branches (16 et 18) sont en position assemblée, enfichée dans les brides d'assemblage (10).

2. Système de cornière d'angle selon la revendication 1, **caractérisé en ce que** les deux branches (16 et 18) ont la même épaisseur de paroi, et **en ce que** les zones de pliage (30 ; 36) des deux branches (16 ; 18) ont des profondeurs (T1, T2) différentes, la somme des deux profondeurs (T1, T2) étant égale à l'épaisseur de paroi des branches (16, 18).

3. Système de cornière d'angle selon la revendication 2, **caractérisé en ce que** la zone de pliage (30) de la branche (16), munie du bord rabattu (34) avec l'ergot de blocage (42), est plus profonde que la zone de pliage (36) de la branche (18) réalisée avec l'évidement de blocage (46).

4. Système de cornière d'angle selon l'une quelconque des revendications 1 à 3, **caractérisé en ce que** l'ergot de blocage (42) est réalisé sur l'extrémité intérieure (48) du bord rabattu (34) de l'une des branches (16) et l'évidement de blocage (46) est réalisé sur la partie frontale (26) de la deuxième branche (18) en étant adjacent à la zone de pliage (36) de celle-ci.

5. Système de cornière d'angle selon l'une quelconque des revendications 1 à 4, **caractérisé en ce que** les bords rabattus (34 ; 40) des deux branches (16, 18) sont réalisés, chacun avec un chanfrein (52), sur l'extrémité extérieure (50).

6. Système de cornière d'angle selon l'une quelconque des revendications 1 à 5, **caractérisé en ce que** les parties d'enfichage (20 ; 24) des deux branches (16, 18) sont réalisées avec des bosselages (54 ; 56) allongés.

7. Système de cornière d'angle selon l'une quelconque des revendications 1 à 6, **caractérisé en ce que** les angles d'enfichage des parties d'enfichage (20 ; 24) des deux branches (16, 18) sont réalisés avec des chanfreins (58 ; 60).
